# EUROPÄISCHE PATENTSCHRIFT

(11) **EP 1 644 430 B1**
(45) Veröffentlichungstag und Bekanntmachung des Hinweises auf die Patenterteilung: **27.08.2008**
(21) Anmeldenummer: 04740538.6
(22) Anmeldetag: 01.07.2004
(51) Int. Cl.: C08G 77/395, C07F 9/40

(54) **VERFAHREN ZUR HERSTELLUNG VON MIT PHOSPHONSÄUREESTER MODIFIZIERTEN SILICONEN**
METHOD FOR PRODUCING PHOSPHONATE-MODIFIED SILICONES
PROCEDE DE PRODUCTION DE SILICONES A MODIFICATION PAR DES ESTERS DE L'ACIDE PHOSPHONIQUE

(30) Priorität: 10.07.2003 DE 10331288
(43) Veröffentlichungstag der Anmeldung: 12.04.2006
(73) Patentinhaber: Wacker Chemie AG, 81737 München (DE)
(72) Erfinder: SCHÄFER, Oliver, 84489 Burghausen (DE); LUCKAS, Hans-Joachim, 81377 München (DE); RACHL, Sandra, 81379 München (DE)
(74) Vertreter: Fritz, Helmut
(86) Internationale Anmeldenummer: PCT/EP2004/007173
(87) Internationale Veröffentlichungsnummer: WO 2005/005519

(56) Entgegenhaltungen:
- US-A- 2 768 193
- US-A- 2 843 615
- US-A- 2 889 349

## Beschreibung

Die Erfindung betrifft ein Verfahren zur Herstellung von mit Phosphonsäureester modifizierten siliciumorganischen Verbindungen durch Reaktion von Phosphonsäureestergruppen enthaltenen Silanen mit reaktiven Siliciumverbindungen.

Mit Phosphonsäureester modifizierte Silicone sind von großem wirtschaftlichen Interesse für eine Vielzahl von Bereichen. Beispielsweise können sie als Gleitmittel auf Metallen und Textilien, flammhemmende Zusätze, Haftvermittler, Zusätze für Kosmetika oder Waschmittel, Entschäumer, Trennmittel, Dämpfungsflüssigkeiten, Flüssigkeiten für Hitzeübertragungen, antistatische Mittel oder für Polituren und Beschichtungen eingesetzt werden.

Mit Phosphor modifizierte Siloxane werden im Allgemeinen durch Reaktion von Trialkylphosphiten mit Chlorpropyl-modifizierten Siloxanen dargestellt, wie beispielsweise in Gallagher et al., J. Polym. Sci. Part A, Vol. 41, 48-59 (2003), beschrieben. Unglücklicherweise werden bei dieser Reaktion lange Reaktionszeiten und hohe Temperaturen benötigt, was zu Umlagerungen im Produkt und damit zu Ausbeuteverlusten sowie ungewünschten Nebenprodukten führt.

Die Reaktion von Trialkylphosphiten mit Chlormethylmodifizierten Siloxanen wie in der Patentschrift US 2,768,193 oder von Gallagher et al. beschrieben, geht deutlich schneller, hat jedoch den Nachteil, dass die so hergestellten Siloxane wegen ihres hohen Siedepunktes nur schwer destillativ gereinigt werden können. Jedoch verläuft auch diese Umsetzung langsam, da die Konzentration der reaktiven Gruppen durch Verdünnung mit unreaktiven Dimethylsiloxy-Einheiten stark reduziert ist, wodurch Reaktionszeiten im Bereich von mehreren Stunden resultieren.

Die der Erfindung zugrunde liegende Aufgabe war es nun, ein Verfahren zur Herstellung von mit Phosphonsäureester modifizierten Organosiloxanen zur Verfügung zu stellen, mit dem ausgehend von kommerziell zugänglichen Chemikalien die mit Phosphonsäureester modifizierten Organosiloxane möglichst einfach, mit kurzen Reaktionszeiten und in hohen Ausbeuten herstellbar sind.

Gegenstand der Erfindung ist ein Verfahren zur Herstellung von mit Phosphonsäureester modifizierten Organosiloxanen der allgemeinen Formel (I):

(SiO_{4/2})ₖ(RSiO_{3/2})ₘ(R₂SiO_{2/2})ₚ(R₃SiO_{1/2})_{q}[O_{1/2}H]ₜ [(O_{f/2}R¹_{3-f}SiCR²₂P(O)(OR⁴)₂]ₛ (I)

worin
- **R**: ein Wasserstoffatom oder einen monovalenten gegebenenfalls mit -CN, -NCO, -NR⁵₂, -COOH, -COOR⁵, -Halogen, -Acryl, -Epoxy, -SH, -OH oder -CONR⁵₂ substituierten Si-C gebundenen C₁-C₂₀-Kohlenwasserstoffrest oder C₁-C₁₅-Kohlenwasserstoffoxyrest in denen jeweils eine oder mehrere, einander nicht benachbarte Methyleneinheiten durch Gruppen -O-, -CO-, -COO-, -OCO-, oder -OCOO-, -S-, oder -NR⁵- ersetzt sein können und in denen eine oder mehrere, einander nicht benachbarte Methineinheiten durch Gruppen, -N=, -N=N- oder -P= ersetzt sein können,
- **R¹**: ein Wasserstoffatom oder einen monovalenten gegebenenfalls mit -CN, -NCO, -COOH, -COOR⁵, -Halogen, -Acryl, -SH, -OH oder -CONR⁵₂ substituierten Si-C gebundenen C₁-C₂₀-Kohlenwasserstoffrest oder C₁-C₁₅-Kohlenwasserstoffoxyrest in denen jeweils eine oder mehrere, einander nicht benachbarte Methyleneinheiten durch Gruppen -O-, -CO-, -COO-, -OCO-, oder -OCOO-, -S-, oder -NR⁵- ersetzt sein können und in denen eine oder mehrere, einander nicht benachbarte Methineinheiten durch Gruppen, -N=,-N=N-, oder -P= ersetzt sein können,
- **R²**: Wasserstoff oder einen gegebenenfalls mit -CN oder Halogen substituierten C₁-C₂₀-Kohlenwasserstoffrest,
- **R⁴**: einen gegebenenfalls mit -CN oder Halogen substituierten C₁-C₂₀-Kohlenwasserstoffrest oder Kohlenwasserstoffoxyrest oder substituierte oder unsubstituierte Polyalkylenoxide mit 1 bis 4000 C-Atomen,
- **R⁵**: Wasserstoff oder einen gegebenenfalls mit -CN oder Halogen substituierten C₁-C₁₀-Kohlenwasserstoffrest,
- **k**: eine ganze Zahl zwischen 0 bis 100.000,
- **m**: eine ganze Zahl zwischen 0 bis 100.000,
- **p**: eine ganze Zahl zwischen 0 bis 100.000,
- **q**: eine ganze Zahl zwischen 0 bis 100.000,
- **f**: eine ganze Zahl von 1, 2 oder 3,
- **s**: eine ganze Zahl von mindestens 1 und
- **t**: eine ganze Zahl von mindestens 0 bedeuten,
wobei
**k** + **m** + **p** + **q** eine ganze Zahl von mindestens 1 ist,
dadurch gekennzeichnet, dass
funktionelle Silanen der Formel (III)

[(R³O)_{f}R¹_{3-f}SiCR²₂P(O)(OR⁴)₂]

alleine oder zusammen mit Silanen allgemeinen Formel IV

[(R³O)_{g}R¹_{4-g}Si]

mit Wasser zur Reaktion gebracht werden,
wobei
- **R³**: Wasserstoff oder einen gegebenenfalls mit -CN oder Halogen substituierten C₁-C₂₀-Kohlenwasserstoffrest und
- **g**: eine ganze Zahl von 1, 2, 3 oder 4 bedeuten und
- **R, R¹, R², R⁴, k, m, p, q, f** und **s**: die vorstehenden Bedeutungen aufweisen.

Die mit Phosphonsäureester modifizierte Organosiloxane der allgemeinen Formel I weisen eine Phosphonsäureesterfunktion auf, die über ein C-Atom durch eine Si-C-P-Bindung an ein Siliciumatom der Siliconverbindung gebunden sind.

Die Reste **R** können gleich oder verschieden, substituiert oder unsubstituiert, aliphatisch gesättigt oder ungesättigt, aromatisch, cyclisch, geradkettig oder verzweigt sein. **R** weist vorzugsweise 1 bis 12 Atome, insbesondere 1 bis 6 Atome, vorzugsweise nur Kohlenstoff- und Wasserstoffatome auf. Vorzugsweise ist **R** ein geradkettiger oder verzweigter C₁-C₆-Alkylrest. Besonders bevorzugt sind die Reste Methyl, Ethyl, Phenyl, Vinyl und Trifluorpropyl.

Die Reste **R¹** können gleich oder verschieden, substituiert oder unsubstituiert, aliphatisch gesättigt oder ungesättigt, aromatisch, cyclisch, geradkettig oder verzweigt sein. **R¹** ist vorzugsweise ein C₁-C₁₀-Alkylrest oder Phenylrest, insbesondere verzweigter oder unverzweigter C₁-C₃-Alkylrest, der substituiert sein kann. Besonders bevorzugt ist **R¹** ein Methylrest oder Ethylrest.

Die Reste **R²** können unabhängig voneinander ebenfalls substituiert oder unsubstituiert, aliphatisch gesättigt oder ungesättigt, aromatisch, cyclisch, geradkettig oder verzweigt sein. **R²** ist vorzugsweise ein C₁-C₃-Alkylrest oder Wasserstoff. Besonders bevorzugt ist **R**² Wasserstoff.

Die Reste **R³** können unabhängig voneinander ebenfalls substituiert oder unsubstituiert, aliphatisch gesättigt oder ungesättigt, aromatisch, cyclisch, geradkettig oder verzweigt sein. **R³** ist vorzugsweise ein C₁-C₅-Alkylrest, insbesondere C₁-C₃-Alkylrest oder Wasserstoff. Besonders bevorzugt ist **R³** ein Methyl- oder Ethylrest.

Die Reste **R**⁴ können unabhängig voneinander ebenfalls substituiert oder unsubstituiert, aliphatisch gesättigt oder ungesättigt, aromatisch, cyclisch, geradkettig oder verzweigt sein. **R⁴** ist vorzugsweise ein C₁-C₁₂-Alkyl- oder Arylrest. Besonders bevorzugt ist **R⁴** ein Methyl-, Ethyl-, Butyl-, Phenyl- oder Cyclohexylrest. **R⁴** kann gegebenenfalls noch Heteroatome wie beispielsweise Sauerstoff oder Stickstoff oder andere funktionelle Gruppen enthalten.

Die Reste **R**⁵ sind vorzugsweise Wasserstoff oder ein substituierter C₁-C₅-Alkylrest.

Vorzugsweise bedeutet **p** Werte von 3 bis 1000, insbesondere 5 bis 500 auf.

Vorzugsweise bedeuten **k** und **m** jeweils unabhängig voneinander eine ganze Zahl von mindestens 0 bis 1000, insbesondere 0.

Vorzugsweise bedeutet **q** eine ganze Zahl von mindestens 1.

Vorzugsweise bedeutet **k** + **m** den Wert 0, d.h. es handelt sich um lineare Organosiloxane. Vorzugsweise bedeutet **q** dabei 1 oder 2.

Vorzugsweise bedeutet **s** Werte von 1 bis 50, insbesondere 2 bis 10.

Vorzugsweise bedeutet **t** Werte von 0 bis 10, insbesondere 0, 1 oder 2.

Vorzugsweise bedeutet **k** + **m** + **p** + **q** eine ganze Zahl von mindestens 2, insbesondere mindestens 3.

Die eingesetzten Alkoxysilane der allgemeinen Formel (III) können einfach und in hohen Ausbeuten durch Umsetzung der entsprechenden Chloralkyl(alkoxy)silane mit Trialkylphosphiten hergestellt werden, wie es beispielsweise in der Patentschrift US 2,7681,93 beschrieben wird.

Beispielsweise können Alkoxysilane der allgemeinen Formel (III) ausgewählt werden aus der Gruppe enthaltend H₃COSi(CH₃)₂CH₂PO(OC₂H₅)₂, (H₃CO)₂Si(CH₃)CH₂PO(OC₂H₅)₂, (H₃CO)₃SiCH₂PO(OC₂H₅)₂, (H₅C₂O)Si(CH₃)₂CH₂PO(OC₂H₅)₂, (H₅C₂O)₂Si(CH₃)CH₂PO(OC₂H₅)₂, (H₅C₂O)₃SiCH₂PO(OC₂H₅)₂, H₃COSi(CH₃)₂CH₂PO(OCH₃)₂, (H₃CO)₂Si(CH₃)CH₂PO(OCH₃)₂, (H₃CO)₃SiCH₂PO(OCH₃)₂, (H₅C₂O)Si(CH₃)₂CH₂PO(OCH₃)₂, (H₅C₂O)₂Si(CH₃)CH₂PO(OCH₃)₂ oder (H₅C₂O)₃SiCH₂PO(OCH₃)₂.

Die Alkoxysilane der allgemeinen Formel (III) reagieren entweder allein oder zusammen mit Silanen der allgemeinen Formel (IV) mit Wasser zu Si-OH-funktionellen Verbindungen, welche anschließend miteinander beispielsweise zu Organosiloxanen oder Organosiloxanharzen kondensieren. Dabei kann auf die Verwendung spezieller Katalysatoren verzichtet werden. Die Reaktion verläuft jedoch auch unter Verwendung von Katalysatoren die nach dem Stand der Technik zur Beschleunigung der Reaktion von Alkoxysilanen beispielsweise in RTV-1 Massen verwendet werden. Es können jedoch nach Bedarf andere Katalysatoren wie beispielsweise Phosphorsäuren verwendet werden oder der pH-Wert verändert werden.

Bei dieser Hydrolyse- bzw. Kondensationsreaktion werden je nach Bedingungen cyclische, lineare, verzweigte oder vernetzte Produkte erhalten, die je nach Gehalt an Phosphonsäuregruppen Löslichkeiten in unterschiedlichen Lösungsmitteln zeigen. Einige dieser Verbindungen sind sogar wasserlöslich.

Bevorzugt wird das Verfahren bei 0 bis 100°C, besonders bevorzugt bei 10 bis 80 C durchgeführt.

Das Verfahren kann dabei sowohl unter Einbeziehung von Lösungsmitteln durchgeführt werden, oder aber auch ohne die Verwendung von Lösungsmitteln in geeigneten Reaktoren. Dabei wird gegebenenfalls unter Vakuum oder unter Überdruck oder bei Normaldruck (0,1 MPa) gearbeitet. Der entstandene Alkohol kann dann unter vermindertem Druck bei Raumtemperatur oder bei erhöhter Temperatur aus dem Reaktionsgemisch entfernt werden.

Bei der Verwendung von Lösungsmitteln sind inerte, insbesondere aprotische Lösungsmittel wie aliphatische Kohlenwasserstoffe, wie beispielsweise Heptan oder Decan und aromatische Kohlenwasserstoffe wie beispielsweise Toluol oder Xylol bevorzugt. Ebenfalls können Ether wie Tetrahydrofuran (THF), Diethylether, *tert*.-Butylmethylether (MTBE) oder Ketone wie Aceton oder 2-Butanon (MEK) verwendet werden. Die Menge und Art des Lösungsmittels sollte ausreichen, um eine ausreichende Homogenisierung der Reaktionsmischung zu gewährleisten. Lösungsmittel oder Lösungsmittelgemische mit einem Siedepunkt bzw. Siedebereich von bis zu 120°C bei 0,1 MPa sind bevorzugt.

Alle vorstehenden Symbole der vorstehenden Formeln weisen ihre Bedeutungen jeweils unabhängig voneinander auf.

In den folgenden Beispielen sind, falls jeweils nicht anders angegeben, alle Mengen- und Prozentangaben auf das Gewicht bezogen, alle Drücke 0,10 MPa (abs.) und alle Temperaturen 20°C.

Die Erfindung wird anhand der nachstehenden Beispiele erläutert.

### Beispiel 1 (nicht erfindungsgemäß):

In einem 250-ml-Dreihalskolben mit Tropftrichter und Rückflusskühler wurde unter Stickstoffatmosphäre 99,7 g (0,6 mol) Triethylphoshit (P(OEt)₃, Aldrich, GC 98%) vorgelegt. Nach Aufheizen auf 140°C wurden unter kräftigem Rühren innerhalb von 3 Stunden 46,4 g Chlormethyldimethoxymethylsilan (0,3 mol) (Wacker-Chemie GmbH, München) langsam zugetropft. Anschließend wurde die Reaktionsmischung noch 30 min auf 170°C aufgeheizt. Nach Abziehen des überschüssigen Triethylphosphits im Vakuum wurde bei einer Temperatur von 133°C und einem Vakuum von 12 mbar 58,6 g Diethoxy-phosphorigester-methyldimethoxymethylsilan (0,23 mol, GC 98%, Ausbeute: 76% d. Th.) abdestilliert.

### Beispiel 2 (nicht erfindungsgemäß):

In einem 250-ml-Dreihalskolben mit Tropftrichter und Rückflusskühler wurde unter Stickstoffatmosphäre 124,5 g (0,75 mol) Triethylphoshit (P(OEt)₃, Aldrich, GC 98%) vorgelegt. Nach Aufheizen auf 140°C wurden unter kräftigem Rühren innerhalb von 2,5 Stunden 69,3g Chlormethyldimethylmethoxylsilan (0,5 mol) (Wacker-Chemie GmbH, München) langsam zugetropft. Anschließend wurde die Reaktionsmischung noch 30 min auf 170°C aufgeheizt. Nach Abziehen des überschüssigen Triethylphosphits im Vakuum wurde bei einer Temperatur von 118 - 122°C und einem Vakuum von 11 mbar 100,4 g Diethoxy-phosphorigester-methyldimethylmethoxysilan (0,42 mol, GC 98,2%, Ausbeute: 83,6% d. Th.) abdestilliert.

### Beispiel 3 (nicht erfindungsgemäß):

In einem 250-ml-Dreihalskolben mit Tropftrichter und Rückflusskühler wurde unter Stickstoffatmosphäre 112,2 g (0,675 mol) Triethylphoshit (P(OEt)₃, Aldrich, GC 98%) vorgelegt. Nach Aufheizen auf 140°C wurden unter kräftigem Rühren innerhalb von 2,5 Stunden 76,8 g Chlormethyltrimethoxysilan (0,45 mol) (Wacker-Chemie GmbH, München) langsam zugetropft. Anschließend wurde die Reaktionsmischung noch 30 min auf 170°C aufgeheizt. Nach Abziehen des überschüssigen Triethylphosphits im Vakuum wurde bei einer Temperatur von 135 - 138°C und einem Vakuum von 12 mbar 105,6 g Diethoxy-phosphorigester-methyl-trimethoxysilan (0,39 mol, GC 97,4%, Ausbeute: 86,2% d. Th.) abdestilliert.

### Beispiel 4 (nicht erfindungsgemäß):

In einem 250-ml-Dreihalskolben mit Tropftrichter und Rückflusskühler wurde unter Stickstoffatmosphäre 99,7 g (0,6 mol) Triethylphoshit (P(OEt)₃, Aldrich, GC 98%) vorgelegt. Nach Aufheizen auf 140°C wurden unter kräftigem Rühren innerhalb von 1,5 Stunden 85,1 g Chlormethyltriethoxysilan (0,4 mol) (Wacker-Chemie GmbH, München) langsam zugetropft. Anschließend wurde die Reaktionsmischung noch 1,5 Stunden auf 170°C aufgeheizt. Nach Abziehen des überschüssigen Triethylphosphits im Vakuum wurde bei einer Temperatur von 146°C und einem Vakuum von 11 - 13 mbar 95,8 g Diethoxy-phosphorigester-methyl-triethoxysilan (0,31 mol, GC 98%, Ausbeute: 77,4% d. Th.) abdestilliert

### Beispiel 5 (Hydrolyse von Dialkoxysilan):

In einem 250-ml-Dreihalskolben Tropftrichter und Rückflusskühler wurde unter Stickstoffatmosphäre 58,6 g Diethoxy-phosphorigestermethyl-dimethoxymethylsilan (0,23 mol, GC 98%) aus Beispiel 1 vorgelegt. Nach Aufheizen auf 60°C wurden unter kräftigem Rühren innerhalb von 10 Minuten 18 g Wasser (1,0 mol) langsam zugetropft. Anschließend wurde die Reaktionsmischung noch 120 Minuten auf 60°C aufgeheizt. Nach Abziehen des entstandenen Alkohols und des überschüssigen Wassers im Vakuum erhielt man 38 g Poly-((diethoxy-phosphorigestermethyl)-methylsiloxan) mit einem durchschnittlichen Molekulargewicht von 1.200 g/mol, wobei gemäß ¹H-NMR hauptsächlich cyclische Verbindungen vorlagen.

### Beispiel 6:

In einem 250 ml Kolben wurden 13,5 g (50 mmol) Diethoxy-Phosphorigester-Methyl-Trimethoxysilan und 6 g Dimethyldimethoxysilan in 150 ml einer Wasser/Aceton-Lösung (50/50) gelöst. Anschließend wurde 3 Tage bei Raumtemperatur stehen gelassen und anschließend das Lösungsmittelgemisch am Rotavapor entfernt. Man erhielt 14.1 g eines homogenen weißen Pulvers, welches sich per GPC und NMR als homogenes Siliconharz ohne linearen Siloxananteile mit einem Molekulargewicht von ca. 3400 g/mol identifizieren ließ.

### Beispiel 7:

In einem 100 ml Kolben wurden 12 g Dimethoxydimethylsilan (100 mmol) und 25,6 g Diethoxy-phosphorigester-methyldimethoxymethylsilan (100 mmol) mit 14,5 g Wasser und 3 Gew.-% 37%iger HCl bei 80°C und 100 mbar 2 Stunden unter Rühren hydrolysiert. Anschließend wurde das überschüssige Wasser und der gebildete Alkohol im Vakuum entfernt. Laut NMR erhielt man 26,3 g eines Copolymers mit Dimethylsiloxan und Methyl/Diethoxy-Phosphorigester-Methyl-dimethoxymethylsiloxan-Gruppen. Laut GPC bestand dieses Polymer zu ca. 44% aus einem cyclischen Anteil mit einem durchschnittlichen Molgewicht von ca. 650 g/mol und einem linearen Anteil von ca. 56% und einem durchschnittlichen Molgewicht von ca. 6200 g/mol. Dies entspricht bei der gegebenen Stöchiometrie einem Polymerisationsgrad von 4 für den cyclischen Anteil und einem Polymerisationsgrad von ca. 18 für die lineare Komponente.

### Beispiel 8:

In einem 100 ml Kolben wurden 6 g Dimethoxydimethylsilan (50 mmol) und 24,0 g Diethoxy-phosphorigester-methyldimethylmethoxysilan (100 mmol) mit 12 g Wasser und 3 Gew.-% 37%iger HCl bei 80°C und 100 mbar 2 Stunden unter Rühren hydrolysiert. Anschließend wurde das überschüssige Wasser und der gebildete Alkohol im Vakuum entfernt. Laut NMR erhielt man 24,1 g eines Copolymers mit Dimethylsiloxan-Kettengliedern und Dimethyl/Diethoxy-Phosphorigester-Methyldimethoxymethylsiloxan-Endgruppen. Laut GPC hatte dieses Polymer ein durchschnittliches Molgewicht von 480 g/mol. Dies entspricht bei der gegebenen Stöchiometrie dem erwarteten Trimer A-B-A.

### Beispiel 9:

In einem 100 ml Kolben wurden 30 g Dimethoxydimethylsilan (250 mmol) und 24,0 g Diethoxy-phosphorigester-methyldimethylmethoxysilan (100 mmol) mit 40 g Wasser und 3 Gew.-% 37%iger HCl bei 80°C und 100 mbar 3 Stunden unter Rühren hydrolysiert. Anschließend wurde das überschüssige Wasser und der gebildete Alkohol im Vakuum entfernt. Laut NMR erhielt man 35,3 g eines Copolymers mit Dimethylsiloxan-Kettengliedern und Dimethyl/Diethoxy-Phosphorigester-Methyldimethoxymethylsiloxan-Endgruppen. Laut GPC hatte dieses Polymer ein durchschnittliches Molgewicht von 810 g/mol.

### Beispiel 10 (Verwendung als Anti-Statik-Additiv):

50 g eines kommerziellen feuchtigkeitsvernetzenden Silicondichstoffes der Fa. Wacker (Wacker Elastosil®) wurden in einem Mischer mit 5 g eines Copolymeren nach Beispiel 7 unter Feuchtigkeitsausschluss vermischt. Die Masse wurde zu einer Platte von 3 mm Dicke ausgestrichen und über 3 Tage vernetzt. Der so erhaltene Probekörper und ein Probekörper ohne Additiv wurde bei Raumtemperatur über 4 Wochen an offener Raumluft gelagert. Dabei wurde die Ablagerung von Staubpartikel auf der Oberfläche nach verschiedenen Zeitabständen optisch beurteilt (++ = staubfrei, + = erkennbare Staubanhaftung, 0 = deutliche Staubanhaftung). Das Ergebnis ist in Tabelle 1 dargestellt.

**Tabelle 1**

| | RTV-1 mit Siliconadditiv | RTV-1 ohne Siliconadditiv |
|---|---|---|
| 1 Woche | ++ | ++ |
| 2 Wochen | ++ | + |
| 4 Wochen | ++ | 0 |

Es zeigte sich, dass das Additiv nach Beispiel 7 eine deutlich verringerte Verschmutzungsneigung im Vergleich zum nicht modifizierten Kautschuk hat.

## Patentansprüche

1. Verfahren zur Herstellung von mit Phosphonsäureester modifizierten Organosiloxanen der allgemeinen Formel (I):
(SiO_{4/2})ₖ(RSiO_{3/2})ₘ(R₂SiO_{2/2})ₚ(R₃SiO_{1/2})_{q}[O_{1/2}H]ₜ [(O_{f/2}R¹_{3-f}SiCR²₂P(O)(OR⁴)₂]ₛ (I)
worin
**R** ein Wasserstoffatom oder einen monovalenten gegebenenfalls mit -CN, -NCO, -NR⁵₂, -COOH, -COOR⁵, -Halogen, -Acryl, -Epoxy, -SH, -OH oder -CONR⁵₂ substituierten Si-C gebundenen C₁-C₂₀-Kohlenwasserstoffrest oder C₁-C₁₅-Kohlenwasserstoffoxyrest in denen jeweils eine oder mehrere, einander nicht benachbarte Methyleneinheiten durch Gruppen -O-, -CO-, -COO-, -OCO-, oder -OCOO-, -S-, oder -NR⁵- ersetzt sein können und in denen eine oder mehrere, einander nicht benachbarte Methineinheiten durch Gruppen, -N=, -N=N- oder -P= ersetzt sein können,
**R¹** ein Wasserstoffatom oder einen monovalenten gegebenenfalls mit -CN, -NCO, -COOH, -COOR⁵, -Halogen, -Acryl, -SH, -OH oder -CONR⁵₂ substituierten Si-C gebundenen C₁-C₂₀-Kohlenwasserstoffrest oder C₁-C₁₅-Kohlenwasserstoffoxyrest in denen jeweils eine oder mehrere, einander nicht benachbarte Methyleneinheiten durch Gruppen -O-, -CO-, -COO-, -OCO-, oder -OCOO-, -S-, oder -NR⁵- ersetzt sein können und in denen eine oder mehrere, einander nicht benachbarte Methineinheiten durch Gruppen, -N=,-N=N-, oder -P= ersetzt sein können,
**R²** Wasserstoff oder einen gegebenenfalls mit -CN oder Halogen substituierten C₁-C₂₀-Kohlenwasserstoffrest,
**R⁴** einen gegebenenfalls mit -CN oder Halogen substituierten C₁-C₂₀-Kohlenwasserstoffrest oder Kohlenwasserstoffoxyrest,
**R⁵** Wasserstoff oder einen gegebenenfalls mit -CN oder Halogen substituierten C₁-C₁₀-Kohlenwasserstoffrest oder substituierte oder unsubstituierte Polyalkylenoxide mit 1 bis 4000 C-Atomen,
**k** eine ganze Zahl zwischen 0 bis 100.000,
**m** eine ganze Zahl zwischen 0 bis 100.000,
**p** eine ganze Zahl zwischen 0 bis 100.000,
**q** eine ganze Zahl zwischen 0 bis 100.000,
**f** eine ganze Zahl von 1, 2 oder 3,
**s** eine ganze Zahl von mindestens 1 und
**t** eine ganze Zahl von mindestens 0 bedeuten,
wobei
**k** + **m** + **p** + **q** eine ganze Zahl von mindestens 1 ist,
**dadurch gekennzeichnet, dass**
funktionelle Silanen der Formel (III):
[(R³O)_{f}R¹_{3-f}SiCR²₂P(O)(OR⁴)₂] (III)
alleine oder zusammen mit Silanen allgemeinen Formel (IV):
[(R³O)_{g}R¹_{4-g}Si] (IV)
mit Wasser zur Reaktion gebracht werden,
wobei
**R³** Wasserstoff oder einen gegebenenfalls mit -CN oder Halogen substituierten C₁-C₂₀-Kohlenwasserstoffrest und
**g** eine ganze Zahl von 1, 2, 3 oder 4 bedeuten und
**R, R¹, R², R⁴, k, m, p, q, f** und **s** die vorstehenden Bedeutungen aufweisen.

2. Verfahren nach Anspruch 1, **dadurch gekennzeichnet, dass** Alkoxysilane der allgemeinen Formel (III) mit Wasser zu Si-OH-funktionellen Verbindungen reagieren, die weiterhin miteinander zu cyclischen, linearen, verzweigten oder vernetzten Organopolysiloxanen oder Organopolysiloxanharzen kondensieren.

3. Verfahren nach Anspruch 1, **dadurch gekennzeichnet, dass** Alkoxysilane der allgemeinen Formel (III) mit Silanen der allgemeinen Formel (IV) und Wasser zu Si-OH-funktionellen Verbindungen reagieren, die weiterhin miteinander zu cyclischen, linearen, verzweigten oder vernetzten Organopolysiloxanen oder Organopolysiloxanharzen kondensieren.

4. Verfahren nach Anspruch 2 oder 3, **dadurch gekennzeichnet, dass** ein Katalysator verwendet wird.

5. Verfahren nach mindestens einem der Ansprüche 1 bis 4, **dadurch gekennzeichnet, dass** das Verfahren bei 10 bis 80°C durchgeführt wird.

6. Verfahren nach mindestens einem der Ansprüche 1 bis 5, **dadurch gekennzeichnet, dass** Lösungsmittel ausgewählt aus der Gruppe enthaltend aliphatische Kohlenwasserstoffe, Heptan, Decan, aromatische Kohlenwasserstoffe, Toluol, Xylol, Ether, Tetrahydrofuran, Diethylether, tert.-Butylmethylether, Ketone, Aceton und 2-Butanon, verwendet wird.

7. Verfahren nach mindestens einem der Ansprüche 1 bis 5, **dadurch gekennzeichnet, dass** kein Lösungsmittel zugesetzt wird.

8. Verfahren nach mindestens einem der Ansprüche 1 bis 7, **dadurch gekennzeichnet, dass**
**R** ein Methyl-, Ethyl-, Vinyl- oder Trifluorpropylrest,
**R¹** ein Methyl- oder Ethylrest,
**R²** Wasserstoff,
**R³** ein Methyl- oder Ethylrest,
**R⁴** ein substituierter oder unsubstituierter Methyl-, Butyl-, Phenyl- oder Cyclohexylrest,
**R⁵** Wasserstoff oder ein substituierter oder unsubstituierter C₁-C₅-Alkylrest,
**k** 0,
**m** 0,
**p** eine ganze Zahl 5 bis 500,
**q** 1 oder 2,
**f** eine ganze Zahl von 1, 2 oder 3,
**s** eine ganze Zahl von 2 bis 10 und
**t** eine ganze Zahl von mindestens 0
bedeuten.

9. Verfahren nach mindestens einem der Ansprüche 1 bis 8, **dadurch gekennzeichnet, dass** die Summe **k** + **m** + **p** + **q** eine ganze Zahl von mindestens 3 bedeutet.

10. Verwendung der mit Phosphonsäureester modifizierten Organosiloxanen der allgemeinen Formel (I) erhältlich nach mindestens einem der Ansprüche 1 bis 9 als Additiv in Elastomeren, Additiv in Siloxan-Elastomeren oder Anti-Statik- Additiv in Siloxan-Elastomeren.

## Claims

1. Process for preparing phosphonate-modified organosiloxanes of the general formula (I):
(SiO_{4/2})ₖ(RSiO_{3/2})ₘ(R₂SiO_{2/2})ₚ(R₃SiO_{1/2})_{q}[O_{1/2}H]ₜ [(O_{f/2}R¹_{3-f}SiCR²₂P(O) (OR⁴)₂]ₛ (I)
in which
**R** is a hydrogen atom or a monovalent, optionally -CN-, -NCO-, -NR⁵₂-, -COOH-, -COOR⁵-, -halogen-, -acryloyl-, -epoxy-, -SH-, -OH- or -CONR⁵₂-substituted Si-C-bonded C₁-C₂₀-hydrocarbyl radical or C₁-C₁₅-hydrocarboxy radical in which one or more nonadjacent methylene units in each case may be replaced by -O-, -CO-, -COO-, -OCO-, -OCOO-, -S- or -NR⁵- groups and in each of which one or more nonadjacent methine units may be replaced by -N=, -N=N- or -P= groups,
**R¹** is a hydrogen atom or a monovalent, optionally -CN-, -NCO-, -COOH-, -COOR⁵-, -halogen-, -acryloyl-, -SH-, -OH- or -CONR⁵₂-substituted Si-C-bonded C₁-C₂₀-hydrocarbyl radical or C₁-C₁₅-hydrocarboxy radical in which one or more nonadjacent methylene units in each case may be replaced by -O-, -CO-, -COO-, -OCO-, -OCOO-, -S- or -NR⁵- groups and in each of which one or more nonadjacent methine units may be replaced by -N=, -N=N- or -P= groups,
**R²** is hydrogen or an optionally -CN- or halogen-substituted C₁-C₂₀-hydrocarbyl radical,
**R⁴** is an optionally -CN- or halogen-substituted C₁-C₂₀-hydrocarbyl radical or hydrocarboxy radical,
**R⁵** is hydrogen or an optionally -CN- or halogen-substituted C₁-C₁₀-hydrocarbyl radical or substituted or unsubstituted polyalkylene oxides having from 1 to 4000 carbon atoms,
**k** is an integer from 0 to 100 000,
**m** is an integer from 0 to 100 000,
**p** is an integer from 0 to 100 000,
**q** is an integer from 0 to 100 000,
**f** is an integer of 1, 2 or 3,
**s** is an integer of at least 1 and
**t** is an integer of at least 0,
where
**k** + **m** + **p** + **q** is an integer of at least 1,
**characterized in that**
functional silanes of the formula (III):
[(R³O)_{f}R¹_{3-f}SiCR²₂P(O)(OR⁴)₂] (III)
are reacted with water alone or together with silanes of the general formula (IV):
[(R³O)_{g}R¹_{4-g}Si] (IV)
where
**R³** is hydrogen or an optionally -CN- or halogen-substituted C₁-C₂₀-hydrocarbyl radical and
**g** is an integer of 1, 2, 3 or 4 and
**R, R¹, R², R⁴, k, m, p, q, f** and **s** are each as defined above.

2. Process according to Claim 1, **characterized in that** alkoxysilanes of the general formula (III) react with water to give Si-OH-functional compounds which condense further with one another to give cyclic, linear, branched or crosslinked organopolysiloxanes or organopolysiloxane resins.

3. Process according to Claim 1, **characterized in that** alkoxysilanes of the general formula (III) react with silanes of the general formula (IV) and water to give Si-OH-functional compounds which condense further with one another to give cyclic, linear, branched or crosslinked organopolysiloxanes or organopolysiloxane resins.

4. Process according to Claim 2 or 3, **characterized in that** a catalyst is used.

5. Process according to at least one of Claims 1 to 4, **characterized in that** the process is carried out at from 10 to 80°C.

6. Process according to at least one of Claims 1 to 5, **characterized in that** solvents are selected from the group comprising aliphatic hydrocarbons, heptane, decane, aromatic hydrocarbons, toluene, xylene, ether, tetrahydrofuran, diethyl ether, tert-butyl methyl ether, ketones, acetone and 2-butanone.

7. Process according to at least one of Claims 1 to 5, **characterized in that** no solvent is added.

8. Process according to at least one of Claims 1 to 7, **characterized in that**
**R** is a methyl, ethyl, vinyl or trifluoropropyl radical,
**R¹** is a methyl or ethyl radical,
**R²** is hydrogen,
**R³** is a methyl or ethyl radical,
**R⁴** is a substituted or unsubstituted methyl, butyl, phenyl or cyclohexyl radical,
**R⁵** is hydrogen or a substituted or unsubstituted C₁-C₅-alkyl radical,
**k** is 0,
**m** is 0,
**p** is an integer from 5 to 500,
**q** is 1 or 2,
**f** is an integer of 1, 2 or 3,
**s** is an integer of from 2 to 10 and
**t** is an integer of at least 0.

9. Process according to at least one of Claims 1 to 8, **characterized in that** the sum of **k** + **m** + **p** + **q** is an integer of at least 3.

10. Use of the phosphonate-modified organosiloxanes of the general formula (I) obtainable according to at least one of Claims 1 to 9 as an additive in elastomers, additive in siloxane elastomers or antistatic additive in siloxane elastomers.

## Revendications

1. Procédé pour la préparation d'organosiloxanes modifiés par des esters de l'acide phosphorique de formule générale (I) :
(SiO_{4/2})ₖ(RSiO_{3/2})ₘ(R₂SiO_{2/2})ₚ(R₃SiO_{1/2})_{q}[O_{1/2}H]ₜ [(O_{f/2}R¹_{3-f}SiCR²₂P(O)(OR⁴)₂]ₛ (I)
où
R signifie un atome d'hydrogène ou un radical hydrocarboné en C₁-C₂₀ ou un radical hydrocarboné en C₁-C₁₅ à fonctionnalité oxy, monovalent, lié par SiC, le cas échéant substitué par -CN, -NCO, -NR⁵₂, -COOH, -COOR⁵_{,} -halogène, -acryle, -époxy, -SH, -OH ou -CONR⁵₂, dans lequel à chaque fois une ou plusieurs unités méthylène non adjacentes peuvent être remplacées par des groupes -O-, -CO-, -COO-, -OCO-, ou -OCOO-, -S-, ou -NR⁵- et dans lequel une ou plusieurs unités méthine non adjacentes peuvent être remplacées par des groupes, -N=, -N=N- ou -P=,
R¹ signifie un atome d'hydrogène ou un radical hydrocarboné en C₁-C₂₀ ou un radical hydrocarboné en C₁-C₁₅ à fonctionnalité oxy, monovalent, lié par SiC, le cas échéant substitué par -CN, -NCO, -COOH, -COOR⁵, -halogène, -acryle, -SH, -OH ou -CONR⁵₂ dans lequel à chaque fois une ou plusieurs unités méthylène non adjacentes peuvent être remplacées par des groupes -O-, -CO-, -COO-, -OCO-, ou -OCOO-, -S-, ou -NR⁵- et dans lequel une ou plusieurs unités méthine non adjacentes peuvent être remplacées par des groupes, -N=, -N=N- ou -P=,
R² signifie hydrogène ou un radical hydrocarboné en C₁-C₂₀ le cas échéant substitué par -CN ou halogène,
R⁴ signifie un radical hydrocarboné en C₁-C₂₀ ou un radical hydrocarboné à fonctionnalité oxy le cas échéant substitué -CN ou halogène,
R⁵ signifie hydrogène ou un radical hydrocarboné en C₁-C₁₀ le cas échéant substitué par -CN ou halogène ou un poly(oxyde d'alkylène) substitué ou non substitué comprenant 1 à 4000 atomes de carbone,
k vaut un nombre entier entre 0 et 100 000,
m vaut un nombre entier entre 0 et 100 000,
p vaut un nombre entier entre 0 et 100 000,
q vaut un nombre entier entre 0 et 100 000,
f vaut un nombre entier parmi 1, 2 ou 3,
s vaut un nombre entier d'au moins 1, et
t vaut un nombre entier d'au moins 0,
où
k + m + p + q vaut un nombre entier d'au moins 1,
**caractérisé en ce qu'**on fait réagir des silanes fonctionnels de formule (III) :
[(R³O)_{f}R¹_{3-f}SiCR²₂P(O)(OR⁴)₂] (III)
seuls ou avec des silanes de formule générale (IV) :
[(R³O)_{g}R¹_{4-g}Si] (IV)
avec de l'eau,
où
R³ signifie hydrogène ou un radical hydrocarboné en C₁-C₂₀ le cas échéant substitué -CN ou halogène et
g vaut un nombre entier parmi 1, 2, 3 ou 4 et
R, R¹, R², R⁴, k, m, p, q, f et s présentent les significations susmentionnées.

2. Procédé selon la revendication 1, **caractérisé en ce que** des alcoxysilanes de formule générale (III) réagissent avec de l'eau en composés à fonctionnalité Si-OH qui condensent en outre les uns avec les autres en organopolysiloxanes ou résines d'organopolysiloxane cycliques, linéaires, ramifié(e)s ou réticulé(e)s.

3. Procédé selon la revendication 1, **caractérisé en ce que** des alcoxysilanes de formule générale (III) réagissent avec des silanes de formule générale (IV) et de l'eau en composés à fonctionnalité Si-OH qui condensent en outre les uns avec les autres en organopolysiloxanes ou résines d'organopolysiloxane cycliques, linéaires, ramifié(e)s ou réticulé(e)s.

4. Procédé selon la revendication 2 ou 3, **caractérisé en ce qu'**on utilise un catalyseur.

5. Procédé selon au moins l'une quelconque des revendications 1 à 4, **caractérisé en ce que** le procédé est réalisé à 10 jusqu'à 80°C.

6. Procédé selon au moins l'une quelconque des revendications 1 à 5, **caractérisé en ce qu'**on utilise un solvant choisi dans le groupe comprenant les hydrocarbures aliphatiques, l'heptane, le décane, les hydrocarbures aromatiques, le toluène, le xylène, les éthers, le tétrahydrofuranne, le diéthyléther, le tert-butylméthyléther, les cétones, l'acétone et la 2-butanone.

7. Procédé selon au moins l'une quelconque des revendications 1 à 5, **caractérisé en ce qu'**on n'ajoute pas de solvant.

8. Procédé selon au moins l'une quelconque des revendications 1 à 7, **caractérisé en ce que**
R signifie un radical méthyle, éthyle, vinyle ou trifluoropropyle,
R¹ signifie un radical méthyle ou éthyle,
R² signifie hydrogène
R³ signifie un radical méthyle ou éthyle,
R⁴ signifie un radical méthyle, butyle, phényle ou cyclohexyle substitué ou non substitué,
R⁵ signifie hydrogène ou un radical alkyle en C₁ à C₅ substitué ou non substitué,
k vaut 0,
m vaut 0,
p vaut un nombre entier de 5 à 500,
q vaut 1 ou 2,
f vaut un nombre entier parmi 1, 2 ou 3,
s vaut un nombre entier de 2 à 10 et
t vaut un nombre entier d'au moins 0.

9. Procédé selon au moins l'une quelconque des revendications 1 à 8, **caractérisé en ce que** la somme k + m + p + q vaut un nombre entier d'au moins 3.

10. Utilisation des organosiloxanes modifiés avec des esters de l'acide phosphonique de formule générale (I) pouvant être obtenus selon au moins l'une quelconque des revendications 1 à 9 comme additif dans les élastomères, additif dans les élastomères de siloxane ou additif antistatique dans les élastomères de siloxane.
